Europäisches Patentamt

European Patent Office

Office européen des brevets

(11) Publication number: **0 088 438**
**B1**

# EUROPEAN PATENT SPECIFICATION

(45) Date of publication of patent specification: **02.03.88**

(51) Int. Cl.⁴: **G 11 B 23/04**

(21) Application number: **83102277.7**

(22) Date of filing: **08.03.83**

(54) Recording tape cartridge.

(30) Priority: **10.03.82 JP 34263/82**
**12.05.82 JP 69985/82**
**08.02.83 JP 17185/83**
**23.02.83 JP 26434/83**

(43) Date of publication of application:
**14.09.83 Bulletin 83/37**

(45) Publication of the grant of the patent:
**02.03.88 Bulletin 88/09**

(84) Designated Contracting States:
**DE FR GB NL**

(56) References cited:
**EP-A-0 045 084**
**EP-A-0 052 479**
**US-A-3 900 170**

(73) Proprietor: **Hitachi Maxell Ltd.**
**No 1-1-88, Ushitora Ibaraki-shi**
**Osaka-fu (JP)**

(73) Proprietor: **Hitachi, Ltd.**
**5-1, Marunouchi 1-chome**
**Chiyoda-ku Tokyo 100 (JP)**

(72) Inventor: **Ogiro, Kenji**
**931-1-302, Kami-lida-cho Totsuka-ku**
**Yokohama-shi Kanagawa-ken (JP)**
Inventor: **Gotoh, Shinichi**
**5-5-303 Oenishishimbayashi-cho 4-chome**
**Nishigyo-ku Kyoto-shi Kyoto-fu (JP)**

(74) Representative: **Selting, Günther, Dipl.-Ing. et al**
**Deichmannhaus am Hauptbahnhof**
**D-5000 Köln 1 (DE)**

## Description

The present invention relates to a recording tape cartridge which has a front lid member pivotally mounted on the front surface of a cartridge case for protecting a recording tape accommodated therein.

A known recording tape cartridge as described in US—A—3 900 170 comprises a cartridge case adapted to be inserted into a holder of the recording device. The holder is mounted to be moved from a first position wherein the cartridge can be inserted into the holder to a second position which is the working position. The tape cartridge player is provided with a lid opening member extending from a base plate and pushing upwardly against the lower edge of the lid which is pivotally mounted on the cartridge. Thus, upon moving the holder into the working position, the lid of the cartridge is automatically opened so that a portion of the tape which was previously covered by the lid becomes exposed to cooperate with the disc cartridge player.

Another magnetic recording tape cartridge as known from EP—A—45 084 has a lid locking means comprised within the cartridge case. Said lid locking means is releasable by a locking release member of the recording device. Said locking release member is introduced from below through a hole provided in the bottom wall of the disc cartridge case upon proper positioning of the disc cartridge case on the recording device.

In another tape cartridge as known from EP—A—52 479 (oldest priority date 17.11.80, publication date 26.5.82), the lid locking means is positioned behind a side wall of the cartridge case and can be accessed by the locking release means of the recording device through a hole provided in the side wall.

A similar tape cartridge as in the present application is described in the parallel application EP—A—88 437 (oldest priority date 10.3.82, publication date 14.9.83).

It is the object of the invention to provide a recording tape cartridge as defined in the first part of Claim 1 which allows to smoothly and reliably release the front lid member from being locked and which has a decreased size.

This problem is solved according to the invention with the features of the characterizing part of Claim 1.

Preferred embodiments of the invention, are described hereunder with reference to the drawings.

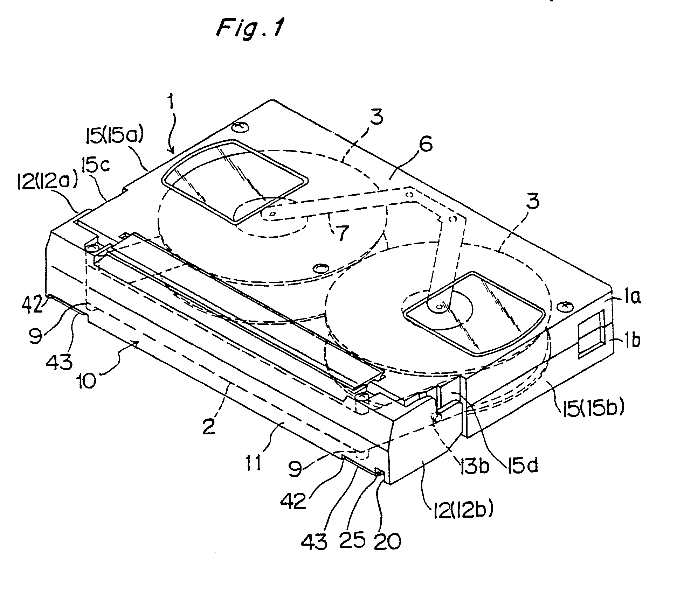

Fig. 1 is a perspective view of an embodiment of a recording tape cartridge according to the present invention;

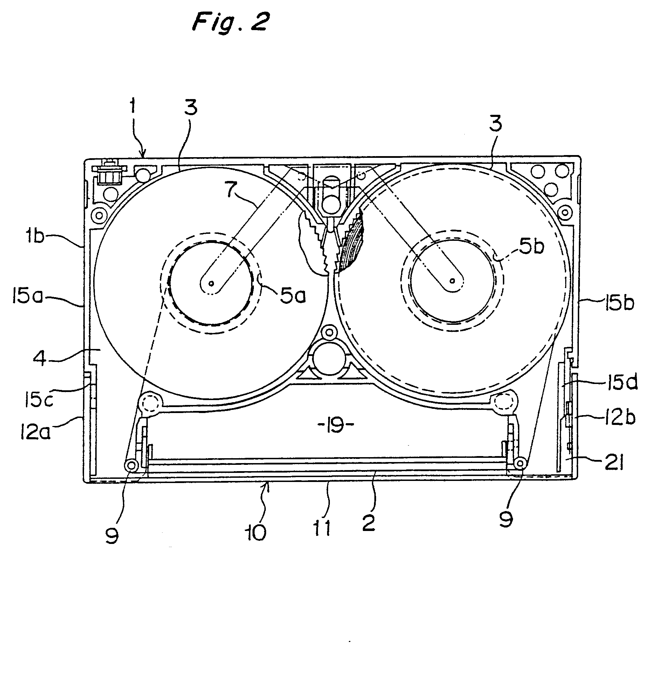

Fig. 2 is a top plan view of the video tape cartridge showing the internal construction thereof;

Fig. 3(A) is a partially enlarged top plan view showing an essential portion of one embodiment of a locking means;

Fig. 3(B) is a cross sectional view taken along the line A—A in Fig. 3(A);

Fig. 4(A) is a partially enlarged top plan view showing an essential portion of another embodiment of a locking means according to the present invention; and

Fig. 4(B) is a cross sectional view taken along the line B—B in Fig. 4(A).

Referring to the drawings, there is shown a recording tape cartridge according to the present invention, which comprises a cartridge case 1 consisting of a top section 1a and a bottom section 1b formed by plastic resin material and connected with each other by screws in a butting manner. Within the cartridge case 1, there are provided a pair of tape reels 3 for winding a video tape 2 for recording and/or reproducing video signals. The tape reels 3 are downwardly pressed at their centers of rotation by a spring plate 7 which is secured to the inner surface of an upper wall member 6 of the cartridge case 1 in positions opposite to a pair of driving shaft insertion holes 5a and 5b defined through a bottom wall member 4 of the cartridge case 1, so that driving shafts (not shown) of the video tape recorder are engaged with hub openings of the tape reels 3 through the insertion holes 5a and 5b when the cartridge case 1 is mounted in the video tape recorder. A pair of tape guide members 9 are provided on both sides in the front part of the cartridge case 1 for guiding the video tape 2, which is drawn out from one tape reel 3 along the front surface of the cartridge case 1 and wound around the other tape reel 3.

A front lid member 10 for covering the front surface of the cartridge case 1 is pivotally connected to the cartridge case 1 in a manner capable of being opened and closed.

The front lid member 10 is formed by plastic resin material, and comprises a front plate 11 for covering the cartridge case 1 longitudinally along the front surface thereof, a pair of connecting members 12a and 11b rearwardly projecting from both sides of the front plate 11 and a pair of pivotal shafts 13a and 13b inwardly projecting from the connecting members 12a and 12b to be opposite to each other. The connecting members 12a and 12b are engaged in stepped wall members 15c and 15d defined in front portions of a pair of side walls 15a and 15b of the cartridge case 1 in a manner stepped inwardly of the side walls 15a and 15b while the pivotal shafts 13a and 13b are rotatably engaged in through-holes 16 formed through the stepped wall members 15c and 15d. Thus, the front lid member 10 is pivotally rotatable about the pivotal shafts 13a and 13b between a closed position for covering the front surface of the cartridge case 1 and an upwardly opened position.

As hereinafter described in detail, the front lid member 10 is urged by a torsion spring 17 to be in the closed position. When the video tape cartridge is not used, the front lid member 10 is closed to cover the front suface of the cartridge case 1 and protect the recording surface of the video tape 2. When, in turn, the cartridge case 1 is mounted in the video tape recorder, the front lid member 10 is opened so that a tape loading pin (not shown) of the video tape recorder is inserted in a pocket member 19 formed in the front surface of the cartridge case 1 in a recessed manner for drawing out the video tape 2 frontwardly along the cartridge case 1.

A substantially square-shaped recess 20 is formed in the lower end portion of the front plate 11 of the front lid member 10 in the right-hand direction while a clearance 21 communicating with the recess 20 is defined between the stepped wall member 15d of the right-hand side wall 15b and the right-hand connecting member 12b of the front lid member 10 to contain a means for locking the front lid member 10 in the closed position when the video tape cartridge is not used.

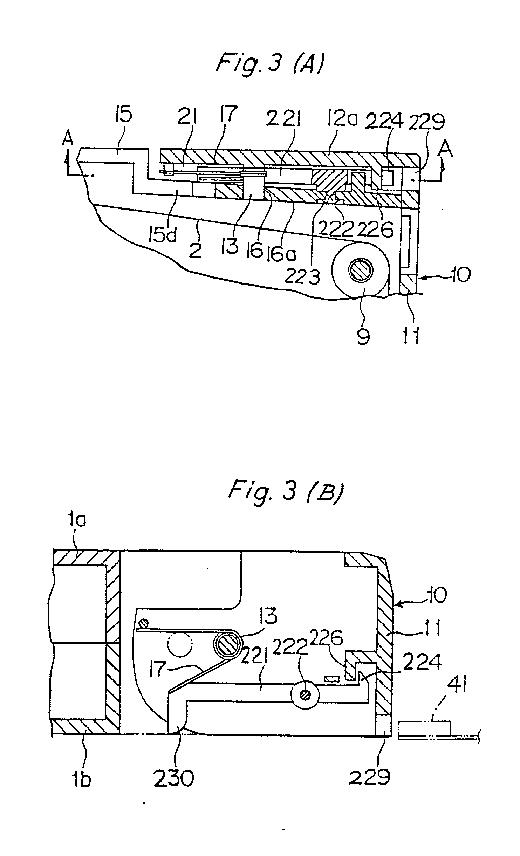

In Fig. 3(a), the stepped wall member 15d is, in top plan view, slanted frontwardly toward the interior of the cartridge case 1 so that the clearance 21 is formed to be narrow in the rear portion and wide in the front portion. A locking member 26 is fitted in the clearance 21 for locking the front lid member 10 in the closed position.

In Figs. 3(A) and 3(B), the stepped wall member 15d is slanted frontwardly toward the interior of the cartridge case 1 in top plan view, so that the clearance 21 extends frontwardly to have its rear portion narrowed and front portion widened. A locking member 221 is arranged within the clearance 21.

The locking member 221 has a shaft 222 laterally projecting from the longitudinal center thereof, which is engagedly and rotatably supported by bearing opening 223 defined through the stepped wall member 15d so that a forward engaging portion 224 of the locking member 221 is vertically rotated about the shaft 222. An L-shaped engaging member 226 is downwardly projectingly formed in the inner surface of the front plate 11, and an end of the torsion spring 17 is brought into contact with the rear end portion of the locking member 221 to urge the same such that the front engaging portion 224 thereof is engaged, from below, with the engaging member 226. A downwardly extending pressed member 230 is formed in the rear end portion of the locking member 221, and is arranged to be in the narrow rear portion of the clearance 21. When the video tape cartridge is not used, thus, the front engaging portion 224 of the locking member 221 is continuously engaged with the engaging member 226 of the front lid member 10, which is in the closed position, to prevent the front lid member 10 from being rotated about the pivotal shafts 13 toward the opened position. On the other hand, when the video tape cartridge is mounted in the video tape recorder in a proper condition, a locking release member 41 provided in the video tape recorder, which also functions to prevent erroneous mounting of the video tape cartridge, is relatively guided from the front direction to enter the clearance 21 through an opening 29 recessedly formed through the lower end of the front plate 11 to press the pressed member 230 downwardly projectingly formed in the rear end of the locking member 221. Thus, the forward engaging portion 224 of the locking member 221 is downwardly moved against the torsion spring 17 to be disengaged from the engaging member 226, thereby releasing the front lid member 10 from the closed condition.

Since the clearance 21 is widened toward the forward end portion and narrowed toward the rear end portion, even if the video tape cartridge is mounted in the video tape recorder in a laterally deviating condition, the locking release member 41 is smoothly guided in the clearance 21, and is properly brought into contact with the pressed member 230 of the locking member 221. When the video tape cartridge is mounted in the video tape recorder in a laterally or vertically inverted condition, the locking release member 41 is not coincident with the opening 229 and is brought into contact with a portion other than the same, thereby preventing erroneous mounting of the video tape cartridge.

Since the stepped wall member 15d of the side wall 15b has its inner surface 16a frontwardly slanted, in top plan view, toward the interior of the cartridge case 1, the magnetic recording tape 2 brought into contact with said inner surface 16a contingently in a condition loosened between the tape guide members 9 is effectively drawn in the interior of the cartridge case 1 and prevented from being loosened along the front surface of the cartridge case 1.

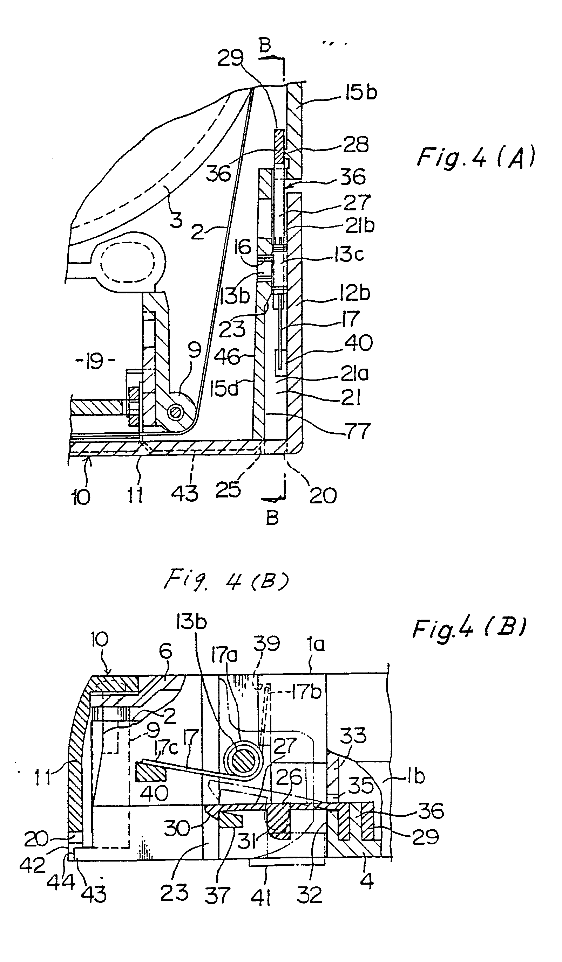

In Fig. 4(A), the stepped wall member 15d of the right-hand side wall 15b is further made thin in its front half portion through a stepped slanting surface 23 in the longitudinal center of its outer side surface so that the clearance 21 is wide in a front portion 21a frontwardly of the stepped slanting surface 23 and narrow in a rear portion 21b rearwardly of the stepped slanting surface 23. That is, the stepped slanting surface 23 is formed forewardly of the through-holes 16 along the vertical direction, and with respect to the wide front portion 21a and the narrow rear portion 21b of the clearance 21, the stepped wall member 15d and the connecting member 12b of the front lid member 12 are opposed to each other in a parallel manner in top plan view. In this embodiment, the left-hand side of the wide front portion 21a, i.e., the front end portion of the side wall member 15b facing the recess 20 is formed as a downwardly-extending slanting guide surface 25. A projecting base portion 13c of a pivotal shaft 13b protruding from the right-hand connecting member 12b of the front lid member 10 is brought into contact with the outer side surface of the stepped wall member 15d to keep the lateral width of the narrow rear portion 21b constant.

As shown in Figs. 4(A) and 4(B), the locking member 26 is formed by elastically deformable plastic resin material, which comprises a thin flat plate 27, a base end member 29 downwardly projecting from the base end portion of the flat plate 27 and having a longitudinal groove 28, an engaging pawl 30 projectingly formed in the lower surface of the forward end of the flat plate 27 and a pressed member 31 projectingly formed in the lower surface of the longitudinal center of the flat plate 27. The innermost wall of the clearance 21 is defined by a lower wall member 32 formed in the bottom section 1b and an upper wall member 33 formed in the top section 1a butting against each other via a through-hole 35, and the right-hand side wall 15b of the cartridge case 1 has a vertical rib 36 projectingly provided in the lower end of its inner surface close to the lower wall member 32. The locking member 26 is fitted in the bottom section 1b previous to assembling of the top section 1a and the bottom section 1b. That is, the base end member 29 of the locking member 26 is inserted in the interior of the lower wall member 32 of the bottom section 1b from above to bring the longitudinal groove 28 into sliding engagement with the vertical rib 33. Then the top section 1a is assembled with the bottom section 1b to be connected therewith by screws in such a manner that the lower surface of the upper wall member 33 of the top section 1a is brought into contact with the upper surface of the flat plate 27 of the locking member 26 to prevent the base end portion of the flat plate 27 from being raised. Thus, the base end member 29 of the locking member 26 is supportedly fixed to the cartridge case 1 in a cantilever manner, so that the flat plate 27 is substantially horizontally extended into the narrow rear portion 21b of the clearance 21 via the through-hole 35. In this condition, the flat plate 27 of the locking member 26 is positioned below the pivotal shaft 13b such that the engaging pawl 30 is located forewardly of the pivotal shaft 13b to be engagingly in contact, by virtue of elasticity of the flat plate 27, with an engaging member 37 projectingly formed in the inner surface of the right-hand connecting member 12b of the closed front lid member 10 from above. In particular, the pressed member 31 of the locking member 26 is arranged to be in the narrow rear portion 21b of the clearance 21. With respect to the aforementioned torsion spring 17, a central coiled portion 17a is engaged in the pivotal shaft 13b and an end portion 17b is engagedly supported within a vertical groove 39 formed in the outer surface of the stepped wall member 15d of the right-hand side wall 15b while the other end portion 17c is supported by a spring bearing 40 provided in the inner surface of the right-hand connecting member 12b of the front lid member 10.

In such a condition, the engaging pawl 30 in the forward end of the locking member 26 is continuously engaged with the engaging. member 37 of the front lid member 10 from above to prevent the front lid member 10 from being rotated about the pivotal shafts 13a and 13b to the opened position, thereby locking the same in the closed position. When the video tape cartridge is mounted in the video tape recorder with the front lid member 10 closed in the aforementioned manner, a locking release member 41 fixed in the video tape recorder is relatively guided in the forward direction to enter the clearance 21 through the recess 20 of the front lid member 10 and press the front lower end of the pressed member 31 of the locking member 26. By virtue of this, the flat plate 27 of the locking member 26 is elastically deformed upwardly from its base end portion, so that the engaging pawl 30 is disengaged from the engaging portion 37 of the front lid member 10, thereby releasing the front lid member 10 from being locked in the closed position.

In this case, the lateral width of the recess 20 formed in the front plate 11 of the front lid member 10 is preferably set such that the locking release member 41 is guided to be close to the left-hand direction in Fig. 4, i.e., close to the slanting wall member 15d of the right-hand side wall 15b rather than to the longitudinal center of the clearance 21. Then, even if the video tape cartridge is mounted in the video tape recorder with deviation in the right or left direction, the locking release member 41 is first brought into contact with the slanting guide surface 25 through the recess 20 and then inserted in the wide front portion 21a of the clearance 21 with leeway, to be in contact with the stepped slanting surface 23 and accurately guided toward the narrow rear portion 21b to appropriately press the pressed member 31 of the locking member 26.

Referring to Fig. 4(B), in portions close to both ends of the front plate 11 of the front lid member 10, i.e., in the lower ends of the portions through which the video tape 2 is frontwardly drawn out, there are recessedly formed openings 42 while projections 43 are protrudingly formed in the front edges of the bottom wall member 4 of the cartridge case 1 to face the openings 42 such that a forward butting surface 44 of each projection 43 is positioned at the middle of the thickness of the front plate 11. By virtue of this, aligning members (not shown) of the video tape recorder are brought into contact with the projections 43 through the openings 42 to properly restrict insertion of the video tape cartridge in the video tape recorder at two points when the video tape cartridge is mounted in the video tape recorder. Since the forward butting surface 44 of each projection 43 is positioned at the middle of the thickness of the front plate 11, even if the video tape cartridge is repeatedly mounted in and removed from the video tape recorder to abrade or scratch the forward butting surface 44, such abrasion or scratches are inconspicuous. Further, the front lid member 10 is effectively prevented from receiving dust or dirt in the interior thereof through the openings 42. Particularly since the right-hand opening 42 is formed in series with the recess 20, which, in turn, is upwardly extended, the slanting guide surface 25 faces the front outer surface of the front lid member 10 keeping in contact with the forward butting surface 44 of the projection 43 even when the front lid member 10 is in the closed position, thereby allowing the locking release member 41 to be in contact with the slanting guide surface 25.

The locking release member 41 also functions to prevent erroneous mounting of the video tape cartridge by smoothly entering the clearance 21 through the recess 20 when the video tape cartridge is properly mounted in the video tape recorder while being in contact with other portions to interfere therewith when the video tape cartridge is mounted in the video tape cartridge in a laterally or vertically inverted condition, thereby preventing erroneous mounting of the video tape cartridge.

A vertical inner side surface 46 of the slanting wall member 15d of the right-hand side wall 15b is slanted toward the central portion of the cartridge case 1 along the frontward direction in top plan view so that the video tape 2 is drawn in the interior of the cartridge case 1 along the inner side surface 46 of the slanting wall member 15d even if the video tape 2 is loosened in the inner side of the right-hand tape guide member 9, thereby preventing the video tape 2 from being loosened.

As hereinabove described, the video tape cartridge shown in the embodiment of the present invention is so formed that the clearance 21 defined between the side wall 15 of the cartridge case 1 which receives the locking member 26 for the front lid member 10 and the connecting portion 12 of the front lid member 10 is stepped to have a wide front portion 21a and a narrow rear portion 21b. Therefore, even if the video tape cartridge slightly deviates in either left-hand or right-hand direction when being mounted in the video tape recorder, the locking release member 41 of the video tape recorder can be easily inserted in the clearance 21 having the wide entrance through the recess 20 of the front lid member 10. Upon such insertion in the clearance 21, the locking release member 41 is effectively guided toward the narrow rear portion 21b of the clearance through the stepped slanting surface 23 to be properly in contact with the pressed portion 31 of the locking member 26. Particularly since the frontwardly-extending slanting guide surface 25 is formed at least in either the right-hand or left-hand side of the front end opening of the wide front portion 21a of the clearance 21 for guiding the locking release member 41, the locking release member 41 can be further smoothly inserted in the clearance 21. Thus, the present invention is particularly effective in a small-sized recording tape cartridge which bears merely a small space in design for the clearance 21.

It is to be noted that usage of the present invention is not limited to video tape cartridges alone, and can be applied to various types of recording tape cartridges.

## Claims

1. A recording tape cartridge comprising:
a cartridge case (1) having a front wall, side walls (15a, 15b) and top and bottom walls (6, 4) for defining a chamber for accommodating a recording tape (2) wound around tape reel means (3), the intermediate portion of said recording tape passing along the front wall;
a lid member (10) having a flat front plate (11) and a pair of connecting plates (12a, 12b) projecting from the front plate, said lid member (10) being rotatably mounted on the cartridge case (1) with the connecting plates (12a, 12b) opposed to the respective side walls (15a, 15b) so as to rotate the front plate (11) between a closed position where the front plate closely faces the front wall of the cartridge case (1) and an opened position;
lid locking means (221, 26) at said cartridge case (1) for locking the lid member in the closed position, said locking means being provided with a press portion (230; 31) for engagement by a locking release member (41) of a recording device which enters through an opening (20; 229) for releasing the locking condition of the lid member (10) to open the same,
said opening (20; 229) being defined on the bottom portion of the front plate (11) of the lid member (10),
characterized in that, for locking and unlocking, said locking means (221, 26) moves in a plane parallel with the side walls of the cartridge,
and that said press portion (230; 31) of said lid locking means (221; 26) is positioned in the rear portion of a clearance (21) defined between one (15b) of the side walls and the corresponding connecting plate (12b) of the lid member (10), the front end of the clearance (21) being connected with the opening (20; 229) of the lid member, the width of said clearance being wider in its front portion than that in its rear portion.

2. The recording tape cartridge according to claim 1, wherein said clearance (21) is defined by wall members, one of which (15b) being inwardly stepped in its front half portion through a slantedly-stepped intermediate portion (23) of said one (15b) of the wall members, said front half portion (15d) providing a guide wall member for said locking release member (41) of said recording device.

## Patentansprüche

1. Aufnahmebandkassette mit
einem Kassettengehäuse (1), welches eine Frontwand, Seitenwände (15a, 15b) und Ober- und Bodenwände (6, 4) aufweist, die eine Kammer zur Unterbringung eines um eine Bandspuleneinrichtung (3) gewickelten Aufnahmebandes (2) bilden, wobei der Mittelabschnitt des Aufzeichnungsbandes entlang der Frontwand verläuft;
einem Deckelteil (10) mit einer flachen Frontplatte (11) und einem Paar von der Frontplatte vorstehender Verbindungsplatten (12a, 12b), wobei das Deckelteil (10) mit den den jeweiligen Seitenwänden (15a, 15b) gegenüberliegenden Verbindungsplatten (12a, 12b) derart drehbar an dem Kassettengehäuse (1) angebracht ist, daß die Frontplatte (11) zwischen einer Schließstellung, in der sie der Frontwand des Kassettengehäuses (1) dicht benachbart gegenüberliegt, und einer Öffnungsstellung drehbar ist;

einer Deckel-Verriegelungsvorrichtung (221, 26) am Kassettengehäuse (1) zum Verriegeln des Deckelteils in der Schließstellung, wobei die Verriegelungsvorrichtung mit einem Druckstück (230; 31) zum Angreifen eines Verriegelungs-Freigabeteils (41) einer Aufzeichnungsvorrichtung versehen ist, das zum Freigeben des Verriegelungszustandes des Deckelteils (10) zum Zwecke des Öffnens des Deckels durch eine Öffnung (20; 229) hindurchtritt,

wobei die Öffnung (20; 229) am Bodenbereich der Frontplatte (11) des Deckelteils (10) gebildet ist,

dadurch gekennzeichnet, daß die Verriegelungsvorrichtung (221; 26) sich zum Verriegeln und Entriegeln in einer parallel zu dem Seitenwänden der Kassette verlaufenden Ebene bewegt und daß das Druckstück (230; 31) der Deckel-Verriegelungsvorrichtung (221; 26) in dem rückwärtigen Bereich eines Freiraums (21) angeordnet ist, der zwischen einer (15b) der Seitenwände und der entsprechenden Verbindungsplatte (12b) des Deckelteils (10) gebildet ist, wobei das Vorderende des Freiraums (21) mit der Öffnung (20; 229) des Deckelteils verbunden ist und die Breite des Freiraums in dessen vorderem Bereich größer ist als im rückwärtigen Bereich.

2. Aufzeichnungsbandkassette nach Anspruch 1, bei welcher der Freiraum (21) durch Wandteile begrenzt ist, von denen eines (15b) in seiner vorderen Hälfte durch eine schräg abgestuften Zwischenbereich (23) dieses Wandteils (15b) nach innen abgestuft ist, wobei diese vordere Hälfte (15d) ein Führungswandteil für das Verriegelungs-Freigabeteil (41) der Ausnahmevorrichtung aufweist.

**Revendications**

1. Cassette à bande d'enregistrement comprenant:

un boîtier (1) de cassette possédant une paroi antérieure, des parois latérales (15a, 15b) et des parois supérieure et inférieure (6, 4) pour définir une chambre servant à loger une bande d'enregistrement (2) enroulée autour de moyens (3) formant bobines pour bande, la partie intermédiaire de ladite bande d'enregistrement passant le long de la paroi antérieure;

un élément formant couvercle (10) possédant un plaque frontale plane (11) et une paire de plaques de raccordement (12a, 12b) qui font saillie depuis la plaque frontale, ledit élément formant couvercle 10 étant monté de manière à pouvoir tourner sur le boîtier (1) de cassette avec les plaques de raccordement (12a, 12b) opposées aux parois latérales (15a, 15b) correspondantes de façon à faire tourner la plaque frontale (11) entre une position fermée où la plaque frontale fait étroitement face à la paroi antérieure du boîtier (1) de cassette et une position ouverte;

un moyen de verrouillage (221, 26) du couvercle sur le boîtier (1) de cassette pour verrouiller en position fermée l'élément formant couvercle, ledit moyen de verrouillage étant pourvu d'une partie formant poussoir (230; 31) destinée à être mise en prise avec un élément de déverrouillage (41) d'un dispositif d'enregistrement qui entre par une ouverture (20; 229) supprimer le verrouillage de l'élément formant couvercle (10) afin d'ouvrir ce dernier,

ladite ouverture (20; 229) étant définie sur la partie inférieure de la plaque frontale (11) de l'élément formant couvercle (10),

caractérisée en ce que, pour le verrouillage et le déverrouillage, ledit moyen de verrouillage (221; 26) se déplace dans un plan parallèle aux parois latérales de la cassette, et en ce que ladite partie formant poussoir (230; 31) dudit moyen de verrouillage (221; 25) de couvercle est placé dans la partie postérieure d'un espace libre (21) défini entre une (15b) des parois latérales et la plaque de raccordement (12b) correspondante de l'élément formant couvercle (10), l'extrémité antérieure de l'espace libre (21) étant reliée à l'ouverture (20; 229) de l'élément formant couvercle, la largeur dudit espace étant plus grande dans sa partie antérieure que dans sa partie postérieure.

2. Cassette à bande d'enregistrement selon la revendication 1, dans laquelle ledit espace libre (21) est défini par des parois, dont une (15b) présente un épaulement vers l'intérieur dans sa moitié antérieure sous la forme d'une partie intermédiaire (23) formant épaulement oblique sur ladite paroi (15b), ladite moitié antérieure (15d) servant de paroi de guidage pour ledit élément de déverrouillage (41) dudit dispositif d'enregistrement.

*Fig.1*

## Fig. 2

## Fig. 3 (A)

## Fig. 3 (B)

Fig.4 (A)

Fig. 4 (B)

Fig.4 (B)